# EUROPEAN PATENT APPLICATION

(11) **EP 3 188 110 A1**
(43) Date of publication of application: **05.07.2017**
(21) Application number: 15836543.7
(22) Date of filing: 25.08.2015
(51) Int. Cl.: G06Q 30/06

(54) **DISPLAY-INTEGRATED INFORMATION DISPLAY SYSTEM**

(30) Priority: 26.08.2014 KR 20140111243
(71) Applicant: Rainus Co. Ltd., Suwon-si, Gyeonggi-do 16690 (KR)
(72) Inventor: KIM, Hyun-Hak, Osan-si Gyeonggi-do 18101 (KR)
(74) Representative: Lahrtz, Fritz
(86) International application number: PCT/KR2015/008888
(87) International publication number: WO 2016/032213

(57) **Abstract**

The present invention relates to a display-integrated information display system. A display-integrated information display system according to an embodiment of the present invention is characterized by comprising: at least one shelf unit having a product exhibition space formed on the upper portion thereof so as to exhibit a product and having an information display space formed on the front portion thereof so as to provide product information regarding the product; a display unit installed in the information display space so as to display the product information; a control unit for receiving the product information regarding the product exhibited on the shelf unit and display area information, which corresponds to the product information, from a main server and controlling the display unit so as to display the product information in a display area that is set according to the display area information; and a power supply unit for supplying power to the display unit and the control unit.

## Description

### [Technical Field]

The present invention relates to a display-integrated information display system.

### [Background Art]

In stores, such as superstores, supermarkets, and clothing stores, labels are generally used to display information on a large number of products. The prices and displayed items of such products can be changed depending on the situation. Accordingly, the labels of the products should be replaced one by one. As such, when the labels are replaced one by one, considerable time and cost are consumed. In addition, problems, such as customer complaint and decrease in customer satisfaction, may occur due to mistakes that may occur upon replacement. To address these problems, an electronic shelf label (ESL), which automatically displays price and supplementary information of a product, has been developed and used.

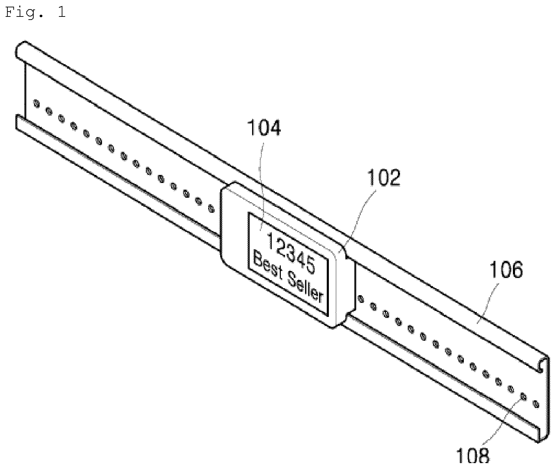

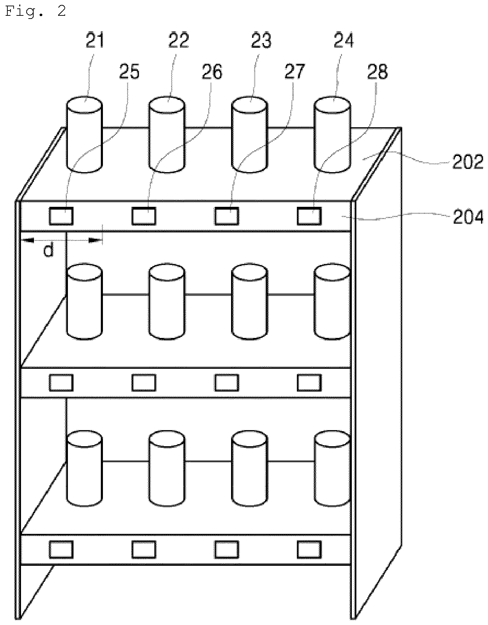

Fig. 1 illustrates an electronic shelf label according to a conventional technology, and Fig. 2 illustrates a shelf to which the electronic shelf label according to a conventional technology is applied. Referring to Fig. 1, an electronic shelf label 102 according to a conventional technology has a small terminal form including a display part 104 such as an LCD. The electronic shelf label 102 illustrated in Fig. 1 is installed on a shelf by sliding and inserting an engaging part protruding from a rear part of the electronic shelf label 102 into the left or right side of a guide member 106 installed on a front surface of the shelf.

Subsequently, as illustrated in Fig. 2, the position of each electronic shelf label 25, 26, 27, or 28 on a guide member 204 is determined according to the position of each product 21, 22, 23, or 24 displayed on the shelf 202.

When the positions are determined in this way, an engaging protrusion (not shown) of the engaging part at a rear part of the electronic shelf label 102 is inserted into an engaged hole 108 formed in the guide member 106, as illustrated in Fig. 1. Accordingly, the position of the electronic shelf label 102 is fixed.

However, in the case of the conventional technology illustrated in Figs. 1 and 2, the size of each of the electronic shelf labels 25, 26, 27, and 28 is fixed, whereby the number of products that may be displayed by each of the electronic shelf labels 25, 26, 27, and 28 is limited. For example, referring to Fig. 2, only a predetermined number of the products 21 can be exhibited within a product exhibition range d due to the size of the electronic shelf label 25 even when a plurality of products 21 is to be displayed on the shelf 202. In addition, there is a disadvantage in that it is difficult to distinguish which electronic shelf label 25, 26, 27, or 28 represents information of which product when too many items are displayed on the shelf 202. Further, there is an inconvenience in that the position of the electronic shelf label 25, 26, 27, or 28 should be frequently changed whenever the positions of products on the shelf 202 and the product exhibition range d are changed.

In addition, in the case of the conventional technology, a separate label and device for promoting and advertising a product should be separately installed around the electronic shelf label 25, 26, 27, or 28. Accordingly, replacement cost occurs when it is desired to change promotion and advertisement content for the product, and it is not easy to manage the same.

### [Disclosure]

### [Technical Problem]

Therefore, the present invention has been made in view of the above problems, and it is one object of the present invention to provide a display-integrated information display system capable of variably displaying product information according to an exhibition range of a product exhibited on a shelf.

It is another object of the present invention to provide a display-integrated information display system capable of variably displaying and changing promotion or advertisement content of a product exhibited on a shelf.

Objects of the present invention are not limited to the above objects and other objects and advantages of the present invention, which have not been referred, will be appreciated by the following description and will be clearly understood by the following examples of the present invention. In addition, it will be easily understood that the objects and advantages of the present invention can be accomplished by means disclosed in the appended claims and combinations thereof.

### [Technical Solution]

In accordance with one aspect of the present invention, provided is a display-integrated information display system, including: a product exhibition space, which is formed on an upper part of the display-integrated information display system and on which products are exhibited, at least one shelf part, which is formed in a front part of the display-integrated information display system and on which an information display space for exhibiting information of the exhibited products is formed, a display part, which is installed in the information display space and is provided to display the product information, a control part, which receives information of the products exhibited on the shelf part and display area information corresponding to the product information from a main server, and controls the display part such that the product information is displayed in a display area set according to the display area information, and a power supply part, which is installed in the shelf part, for supplying power to the display part and the control part.

### [Advantageous effects]

As apparent from the fore-going, the present invention advantageously provides a display-integrated information display system capable of variably displaying product information according to an exhibition range of a product exhibited on a shelf.

In addition, the display-integrated information display system according to the present invention has an advantage in that promotion or advertisement content of a product exhibited on a shelf may be variably displayed and changed.

### [Description of Drawings]

Fig. 1 illustrates an electronic shelf label according to a conventional technology.
Fig. 2 illustrates a shelf to which an electronic shelf label according to a conventional technology is applied.
Fig. 3 schematically illustrates a display-integrated information display system according to the present invention.
Fig. 4 is an embodiment illustrating a shelf part and a display part of a display-integrated information display system according to the present invention.
Fig. 5 illustrates an embodiment of a display part of a display-integrated information display system according to the present invention.

### [Best mode]

The above objects, characteristics, and advantages will be described in detail with reference to the attached drawings. Accordingly, those skilled in that art to which the present invention pertains will easily implement the technical spirits of the present invention. In the following description of the present invention, a detailed description of known functions and configurations incorporated herein will be omitted when it may make the subject matter of the present invention unclear. Hereinafter, preferred embodiments according to the present invention are described in detail with reference to the attached drawings. The same reference numerals in the drawings denote the same or similar elements.

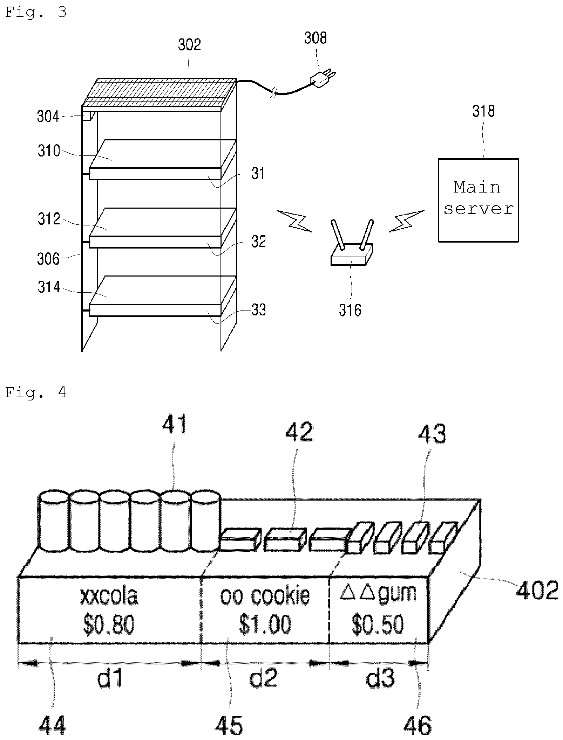

Fig. 3 schematically illustrates a display-integrated information display system according to the present invention.

Referring to Fig. 3, the display-integrated information display system according to the present invention includes a plurality of shelf parts 310, 312, and 314 for exhibiting products; display parts 31, 32, and 33 for displaying information on products exhibited on the shelf parts 310, 312, and 314; and a control part 304 for controlling information display of the display parts 31, 32, and 33. In addition, the display-integrated information display system according to the present invention includes a power supply part for supplying power to the display parts 31, 32, and 33 and the control part 304. Here, the power supply part is installed inside the shelf parts 310, 312, and 314 and includes a solar cell 302, a power supply line 306, and an external power supply part 308.

The shelf parts 310, 312, and 314 have a flat structure as illustrated in Fig. 2. A product exhibition space for exhibiting products is formed on upper parts of the shelf parts 310, 312, and 314, and an information display space for displaying information on products exhibited in the product exhibition spaces is formed at front parts of the shelf parts 310, 312, and 314.

The display parts 31, 32, and 33 are respectively installed at information display spaces formed at front parts of the shelf parts 310, 312, and 314, and display information on products exhibited in the product exhibition spaces according to control by the control part 304. Each of the display parts 31, 32, and 33 may be formed as an integrated display having a length corresponding to the length of the information display space. In addition, each of the display parts 31, 32, and 33 may be an LCD panel, an LED panel, an e-ink panel, or the like. Considering the characteristic that determined product information should be displayed on a shelf part for a considerably long period, power consumption is much lower when displaying product information by adopting an e-ink panel as the display parts 31, 32, and 33, compared to other panel types, whereby system maintenance cost is reduced.

A main server 318 stores information on products exhibited on each of the shelf parts 310, 312, and 314. In addition, the main server 318 stores display area information corresponding to information on each product. On each of the shelf parts 310, 312, and 314, different products or products manufactured by different manufactures are exhibited occupying different shelf widths. The main server 318 generates display area information to specify a display area corresponding to information on each product such that information on each product is exhibited on the display part according to an exhibition range of each of products having different shelf widths.

In an embodiment of the present invention, the display area information may include position information to specify a display part, on which information on a product is displayed, and coordinate information, which is provided to specify a display area on a specified display part, specified by the position information.

In accordance with an embodiment of the present invention, a plurality of display-integrated information display systems may be installed in a store. Here, each of the display-integrated information display systems may include a plurality of shelf parts 310, 312, and 314. Accordingly, to set a display area of each product, a position on a shelf part on which the product is to be exhibited, i.e., a position of a display part on which information on each product is to be displayed, should be specified. Accordingly, display area information stored in the main server 318 may include a first identification number to specify a display-integrated information display system in which a product is exhibited, and a second identification number to specify a shelf part or a display part, on which the product is to be exhibited, in the display-integrated information display system.

When a display part, on which product information is to be displayed, is specified by the first and second identification numbers, a display area, on which each product information is to be display, corresponding to the specified corresponding display part should be specified. Accordingly, display area information may include coordinate information to display information on each product.

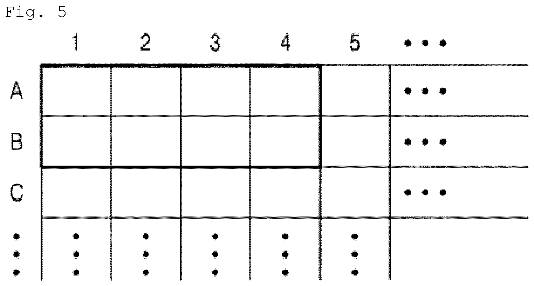

For example, the display part of the present invention may be divided into unit display areas having a constant size, and a coordinate may be provided to each of the unit display areas, as illustrated in Fig. 5. That is, a coordinate for each unit display area (A2, C3, ...) may be set according to abscissa (1, 2, 3, 4, 5, ...) and ordinate (A, B, C, ...) set as illustrated in Fig. 5. In an embodiment of the present invention, a display area used to display information on each product may be specified through coordinate information. For example, when coordinate information on product information on product X is set to (A1, B4), this product information may be displayed in a display area indicated by a bold line in Fig. 5.

In an embodiment of the present invention, the main server 318 may receive information on the size of each product and information on the number of each product type from a manager. The main server 318 may generate display area information corresponding to each product based on the input size information and product number information. For example, the width of product X may be input as size information on product X, and the number of product X exhibited on the shelf part 310 may be input as number information on exhibited product X. In this case, the main server 318 determines a value obtained by multiplying the size information on product X by the exhibited number information as the length on which product X is to be displayed on the display part 31. According to such a determined length, a display area on which product X is to be displayed may be generated as coordinate information as described above.

When a display area on which each product information is to be displayed is set on the display parts 31, 32, and 33, the control part 304 receives information on each product and display area information corresponding to the product information from the main server 318. Subsequently, the control part 304 controls the display parts 31, 32, and 33 such that each product information received is displayed on a display area specified by the display area information.

Here, the product information transmitted from the main server 318 may be transmitted to the control part 304 via a gateway 316, or may be directly transmitted to the control part 304 without passing through the gateway 316. In addition, the control part 304 may include a communication module (not shown) for wired or wireless communication with the gateway 316 or the main server 318 to request and receive product information.

Here, product information displayed on each display area of each of the display parts 31, 32, and 33 may include at least one of name information, pricing information, manufacturer information, origin information, and capacity information on the product.

In addition, in an embodiment of the present invention, the product information may include advertising information related to the product. Further, display area information corresponding to each product information may include advertisement display area information for setting an advertisement display area on which advertising information is displayed. Accordingly, the control part 304 may control the display parts 31, 32, and 33 such that advertising information received from the main server 318 is displayed on an advertisement display area specified by advertisement display area information. The advertising information may be displayed for each product on each of set advertisement display areas of the display parts 31, 32, and 33, or may be displayed over the entire area of the display parts 31, 32, and 33 regardless of the display areas.

The solar cell 302, which is installed on the uppermost part of the display-integrated information display system, generates power by absorbing ambient light and supplies the generated power to the control unit 304 and the display units 31, 32, and 33 via the power supply line 306. In an embodiment of the present invention, the electric power produced by the solar cell 302 may be supplied to a separate charger (not shown) and used to charge the electric power. In addition, to supply the electric power produced by the solar cell 302 to the control part 304 and the display parts 31, 32, and 33, a switched-mode power supply (SMPS), as a power supply device using a switching circuit, may be additionally provided between the solar cell 302 and each of the control part 304 and display parts 31, 32, or 33.

In general, lights installed on a ceiling of a store, in which shelves are installed, are on from morning to late at night. Accordingly, the display-integrated information display system according to the present invention may generate electric power using such store lighting and the solar cell 302, whereby system maintenance cost may be reduced.

In addition, as illustrated in Fig. 3, the external power supply unit 308, such as a plug that can be inserted into a socket, may be separately provided such that external power can be supplied separately from the solar cell 302.

Fig. 4 is an embodiment illustrating a shelf part and a display part of the display-integrated information display system according to the present invention.

Referring to Figs. 3 and 4, the control part 304 receives information on products exhibited on the shelf parts and display area information corresponding to the product information from the main server 318. Subsequently, the control part 304 controls the display parts such that the received product information is displayed on a display area specified by display area information corresponding to the received product information.

For example, when different product types 41, 42, and 43 are exhibited on a shelf part 402 as illustrated in Fig. 4, each of the products 41, 42, and 43 has a different exhibition range having a different width d1, d2, or d3. Accordingly, the control part 304 sets display areas 44, 45, and 46 on a display part to correspond to an exhibition range of each of the products 41, 42, and 43 referring to display area information. When the display areas are set in this way, the control part 304 controls the display part such that product information transmitted from the main server 318 is displayed on the display area of each of the products. The control part 304 performs control such that the backgrounds of the display areas 44, 45, and 46 have different colors or shades or a boundary line is displayed at boundary portions between the display areas 44, 45, and 46 so as to distinguish the set display areas 44, 45, and 46.

Meanwhile, Fig. 4 illustrates that a plurality of products of the same type are exhibited side by side on the respective exhibition ranges on the shelf part 402, corresponding to the respective display areas 44, 45, and 46. However, according to another embodiment of the present invention, only one product may exhibited on the respective exhibition ranges on the shelf part 402, corresponding to the respective display areas 44, 45, and 46. In other words, products may be exhibited such that only one product is disposed on each of the display areas 44, 45, and 46. Here, products may be vertically exhibited.

By setting the display area 44, 45, or 46 for each product as illustrated in Fig. 4 and thus displaying information for each product, the products 41, 42, and 43 exhibited on the shelf part 402 may be more clearly distinguished. Accordingly, although a boundary area between products is minimized when the products are exhibited on the shelf part 402, there is no problem in displaying information on each of the products. Accordingly, the display-integrated information display system according to the present invention has an advantage in that much more products may be exhibited, compared to a shelf according to a conventional technology. In addition, consumers may clearly identify information on each product, whereby convenience in purchasing a product is improved.

In addition, in the case a conventional technology as illustrated in Figs. 1 and 2, there is inconvenience in that, upon desiring to change the arrangement of exhibited products or replace the products, a manager should release the fixation of each label thereof, and then fix the same again after changing the layout thereof. However, the present invention has an advantage in that, when the layouts of the products 41, 42, and 43 are changed or the products are replaced and thus the width d1, d2, or d3 of an exhibition range for each product is changed, the display areas 44, 45, and 46 are reset only through the control part 304.

In addition, in accordance with the present invention, the display is provided in an integrated form and may display information on a product to match the position of the product by changing SW. Accordingly, static and dynamic advertisements for products may be provided without restriction of time and display space.

Further, in accordance with the present invention, advertisements for each product may be provided using a portion of the display, or all shelves may provide the same product advertisement using the entire display. In addition, in accordance with the present invention, other stores connected by the same system may simultaneously provide the same advertisement at the same time.

By introducing the display-integrated information display system suggested in the present invention, efficiency of advertising increases and a store may provide a product-specific advertisement in real time, thereby creating a new profit model.

While the present invention has been particularly shown and described with reference to exemplary embodiments thereof, it will be understood by those of ordinary skill in the art that various substitutions, modifications, changes in form and details may be made therein without departing from the technical spirit of the present invention. Therefore, the scope of the present invention is not limited to the aforementioned embodiments and the attached drawings.

## Claims

1. A display part-integrated information display system, comprising:
at least one shelf part, on an upper part of which a product exhibition space for exhibiting products is formed and at a front part of which an information display space for exhibiting information of the exhibited products is formed;
a display part, which is installed in the information display space and is provided to display the product information;
a control part, which receives information of the products exhibited on the shelf part and display area information corresponding to the product information from a main server, and controls the display part such that the product information is displayed in a display area set according to the display area information; and
a power supply part, which is installed in the shelf part, for supplying power to the display part and the control part.

2. The display-integrated information display system according to claim 1, wherein the power supply part comprises a solar cell that is installed on an uppermost part of the display-integrated information display system and generates power by absorbing ambient light.

3. The display-integrated information display system according to claim 1, wherein the display area information comprises position information to specify a display part, on which information on a product is displayed; and coordinate information, which is provided to specify a display area on a specified display part, specified by the position information.

4. The display-integrated information display system according to claim 1, wherein the display area information is generated based on information on product size and information on an exhibited product number which are input to the main server.

5. The display-integrated information display system according to claim 1, wherein the product information comprises at least one of name information, pricing information, manufacturer information, origin information, and capacity information on the product.

6. The display-integrated information display system according to claim 1, wherein the display area is variably set depending upon a total width of products exhibited on the shelf part.

7. The display-integrated information display system according to claim 1, wherein the product information comprises advertising information related to the products, the display area information comprises advertisement display area information for displaying the advertising information, and the control part controls the display part such that the advertising information is displayed on an advertisement display area set according to the advertisement display area information.
